(19) Europäisches Patentamt

European Patent Office

Office européen des brevets

(11) Veröffentlichungsnummer : **0 464 249 B1**

(12) **EUROPÄISCHE PATENTSCHRIFT**

(45) Veröffentlichungstag der Patentschrift :
05.01.94 Patentblatt 94/01

(51) Int. Cl.⁵ : **C01B 25/36,** C01B 33/34,
// B01J29/04, B01J20/18

(21) Anmeldenummer : 90112880.1

(22) Anmeldetag : 05.07.90

(54) **Verfahren zur Herstellung eines weitporigen kristallinen Molekularsiebes.**

(43) Veröffentlichungstag der Anmeldung :
08.01.92 Patentblatt 92/02

(45) Bekanntmachung des Hinweises auf die
Patenterteilung :
05.01.94 Patentblatt 94/01

(84) Benannte Vertragsstaaten :
AT BE CH DE DK ES FR GB GR IT LI LU NL SE

(56) Entgegenhaltungen :
EP-A- 0 141 662
WO-A-89/09749
US-A- 4 535 070
NATURE, Band 331, 25. Februar 1988, Seiten
698-699; M.E. DAVIS et al.: "A molecular sieve
with eighteen-membered rings"
STUDIES IN SURFACE SCIENCE AND CATA-
LYSES, Band 28, PROCEEDINGS OF THE 7TH
INTERNATIONAL ZEOLITE CONFERENCE,
Tokyo, 17.-22. August 1988, Seiten 103-112,
Elsevier, Amsterdam, NL; E.M. FLANIGEN et
al.: "Aluminophosphate molecular sieves and
the periodic table"

(73) Patentinhaber : VAW Aluminium AG
Georg-von-Boeselager-Strasse 25
D-53117 Bonn (DE)
Patentinhaber : ZENTRALINSTITUT FÜR
PHYSIKALISCHE CHEMIE
Rudower Chaussee 5
D-12489 Berlin (DE)

Patentinhaber : Akademie der Wissenschaften
der DDR
Rudower Chaussee 5
D-12489 Berlin (DE)
Patentinhaber : LEUNA-WERKE AG
Am Haupttor
D-06236 Leuna (DE)

(72) Erfinder : Dr. Arno Tissler
Koernicke Str. 2
5300 Bonn 1 (DE)
Erfinder : Dr. Roland Thome
Brüsseler Str. 58
5300 Bonn (DE)
Erfinder : Prof. Dr. Martin Bülow
Leninallee 222
O-1156 Berlin (DE)
Erfinder : Dr. Elke Jahn
Rombergstr. 32
W-4630 Bochum 1 (DE)
Erfinder : Dr. Ulrich Schülke
Wolfsberger Str.36
O-1147 Berlin (DE)
Erfinder : Dr.Peter Kraak
Faraday Str.55
O-7022 Leipzig (DE)
Erfinder : Dr. Karl Becker
August- Bebel-Str.2
O4607 Bad Kösen (DE)

(74) Vertreter : Müller-Wolff, Thomas
HARWARDT NEUMANN, Patent- und
Rechtsanwälte, Postfach 14 55
D-53704 Siegburg (DE)

EP 0 464 249 B1

## Beschreibung

Anwendungsgebiet der Erfindung

Die Erfindung betrifft ein Alumophosphat-Molekularsieb sowie seine zusätzlich ein Element der 4. Hauptgruppe des PSE enthaltende Modifikation mit definierter Hohlraumstruktur, das sich als Katalysator, als Katalysatorkomponente, als selektives Adsorbens oder als Sensormatrix eignet.

Charakteristik des bekannten Standes der Technik.

Molekularsiebe, die zum zeolithischen Typ der Alumosilikate gehören, sind bereits seit langem bekannt. Sie zeichnen sich dadurch aus, daß ihre Struktur aus $AlO_2^-$- und $SiO_2$-Tetraedern aufgebaut ist, deren Abfolge im Gitter zu einer charakteristischen Porenstruktur führt. Diese und andere Eigenschaften verleihen diesen Festkörpern zum Teil hervorragende Eigenschaften bei katalytischen Umwandlungen sowie bei Stofftrennprozessen. Durch Modifizierung der Grundtypen dieser Zeolithe, z.B. mit Metallverbindungen, lassen sich dabei bestimmte Eigenschaften der Zeolithe optimieren.

Die Verwendung von Molekularsieben, die neben Aluminium und Silizium auch noch Phosphor enthalten, wird in zahlreichen Patentschriften beschrieben (z.B. US 3 972 832, US 3911041, US 4665 251, DE-off-2 542 230 und DD 123 446). Im Falle der zeolithischen Molekularsiebe wird diese Zusammensetzung im wesentlichen durch ein nachträgliche Modifizierung eines Alumosilikats mit einer phosphorhaltigen Verbindung erreicht.

In der Patentschrift US 4 440 871 wird demgegenüber eine neue Klasse von Silico-Alumophosphaten mit der Kurzbezeichnung SAPO beschrieben, die sich durch eine zeolithähnliche Struktur und Eigenschaften auszeichnet und bei der bereits im Verlaufe der hydrothermalen Kristallisation alle chemischen Bestandteile des Molekularsieb-Produktes anwesend sind.

Auch die EP 0146385 bis 0146390 beanspruchen die Erfindung verschiedener Typen von Silico-Alumophosphaten (Kurzbezeichnung MCM), die sich hinsichtlich der Vorschriften ihrer Herstellung und teilweise ihrer Strukturdaten von den vorgenannten unterscheiden.

Allen genannten Typen werden charakteristische katalytische Eigenschaften zugeschrieben, ebenso wie ihre spezifischen Fähigkeiten, auf Grund einer bestimmten Größe ihrer Porenöffnungen sowie ihrer Porengeometrie, anorganische und organische Moleküle bis in einer bestimmten, für jeden Typ charakteristischen Größe, ad- und desorbieren, zu können. Der Nachteil, der für die in den oben aufgeführten Patentschriften (außer EP 0146389) beschriebenen Molekularsieb-Typen darin besteht, daß ihre Porenöffnungen zwischen etwa 2,1 bis 7,4 Å betragen und sie daher nicht befähigt sind, Moleküle mit effektiven Querschnitten, die größer als diese Porenweiten wären, zu adsorbieren, wird mit dem Anspruch des Patents US 88/92910 - das Molekularsieb VPI-5 betreffend - überwunden.

Die großen Poren des Molekularsiebs VPI-5, das eine Phase auf Aluminiumphosphatbasis darstellt, werden durch 18-gliedrige Ringe begrenzt. Die gleiche Struktur wie VPI-5 soll das Silico-Alumophosphat-Molekularsieb MCM-9 ( EP 0146 389) aufweisen (E.G. Derouane et al, MCM-9: A very large pore Silico-Alumophosphat-Molecular Sieve, in P.A. Jacobs and R.A. van Santen (Eds.), Zeolites in the Nineties, Elsevier, Amsterdam, 1989, p. 119). Ein Mangel der beiden letztgenannten Patentschriften zur Synthese der weitporigen Molekularsiebe besteht darin, daß sie keine Information darüber enthalten, in welchem Maße bestimmte Eigenschaften der Molekularsiebe durch Wahl der Ausgangsstoffe oder Syntheseparameter variiert werden können. Das erschwert die Anwendung dieser Synthesevorschriften bei Anpassungsversuchen der Molsiebe an gewünschte Einsatzgebiete, die Steuerung der Kristallgröße und -morphologie, etwa durch Optimierung der Keimbildungsphase und Kristallisationsgeschwindigkeit. Weiterhin ist die erfolgreiche Synthese der Molekularsiebe VPI-5 und MCM-9 entsprechend den Patentvorschriften an den Einsatz einer strukturdirigierenden organischen Substanz (Template-Verbindung) gebunden. Diese Forderung beeinträchtigt einerseits die Wirtschaftlichkeit des Verfahrens, insbesondere bei Maßstabsvergrößerung der Synthese. Andererseits enthalten diese Synthesevarianten umweltgefährdende Prozeßstufen, da als strukturdirigierende Verbindungen bevorzugt organische Amin- bzw. quaternäre Ammoniumverbindungen eingesetzt werden.

Ziel der Erfindung

Das Ziel der Erfindung besteht darin, ein ökonomisch und ökologisch vorteilhaftes Verfahren insbesondere ein templatfreies bzw. rein anorganisches Syntheseverfahren zur Herstellung eines weitporigen Alumophosphat-Molekularsiebes bzw. seiner Si-enthaltenden Modifikation mit definierter Struktur zu entwickeln.

EP 0 464 249 B1

## Darlegung des Wesens der Erfindung

Die erfindungsgemäße Aufgabe besteht insbesonders in der Entwicklung eines Herstellungsverfahrens für ein Alumophosphat-Molekularsieb bzw. seiner zusätzlich ein Element der 4. Hauptgruppe des PSE enthaltenden Modifikation mit mikroporöser Raumnetzstruktur, bestehend aus einer Kombination von $AlO_2^-$-, $PO_2^+$- bzw. zusätzlich z.B. $SiO_2$-Tetraederbausteinen, das sich als Katalysator, als Katalysatorkomponente, als Sensormatrix oder, aufgrund der Geometrie seiner Porenöffnungen, auch als selektives Adsorbens für Moleküle eignet, deren kinetische Durchmesser größer oder gleich 0,8 nm sind.

Die Aufgabe wird erfindungsgemäß dadurch gelöst, daß man wasserhaltiges Aluminiumoxyd, z.B. Pseudo-Böhmit, mit einer alkaliarmen Kieselsäure-Quelle, z.B. Kieselsol oder Fällungskieselsäure, die vorteilhafterweise im Temperaturbereich zwischen 20 und 90°C für mindestens 24 Stunden gealtert wurde oder einer alkaliarmen Verbindung eines anderen Elements der 4. Hauptgruppe des PSE, intensiv im molaren Verhältnis von 1 $Al_2O_3$ : (0 - 5,0) $MO_2$, mischt, das gelartige Gemisch mit einer -P-O-P-Baugruppen enthaltenden Phosphorverbindung, z.B. Polyphosphorsäure oder Pyrophosphorsäure und/oder kettenförmigen bzw. zyklischen Polyphosphorverbindungen mit einer Kettenlänge $\geqq$ 3 bzw. deren Salze, im molaren Verhältnis von 1 $Al_2O_3$ : (0,8 - 2,6) $P_2O_5$, versetzt und erneut in oben genannter Weise mischt bzw. homogenisiert.

Vorzugsweise wird das homogenisierte Produkt unter Rühren mit Wasser bis zu einem Feststoffgehalt von mindestens 4,5 Masse-% verdünnt und in die resultierende Suspension eine anorganische kristallisationsfördernde Verbindung, z.B. eine kristalline oder teilkristalline Substanz mit zumindest den zu den in Tabelle 1 aufgelisteten Röntgenreflexen gehörenden Netzebenenabständen oder ein gealterter, aber noch röntgenamorpher Keimbildungsgel mit einem $P_2O_5/Al_2O_3$-Verhältnis von 0,5 - 2,6 vorzugsweise 1 - 1,5 im Verhältnis 5-30 Masse-%, bezogen auf den Feststoffgehalt der Suspension, eingerührt.

Erfindungsgemäß wird das Gesamtgemisch oder Komponenten davon anschließend bei Temperaturen von 95°C bis 300°C, vorzugsweise bei 120 - 150°C, in einem Autoklaven für mindestens zwei Stunden einer hydrothermalen Kristallisation unterworfen.

Die Zusammensetzung der bei 50°C getrockneten Produkte bewegt sich in den Grenzen der Summenformel

$$(0-0,7)MO_2 : Al_2O_3 : (1,0\pm0,2)P_2O_5 : (0-10)H_2O$$

und weist zumindest die zu den in Tabelle 1 aufgelisteten Röntgenreflexen gehörenden Netzebenenabstände auf.

### Tabelle 1

| 2 $\Theta$ Röntgenreflex (Cu-kα-Strahlung) | Intensität |
|---|---|
| 6,2 - 5,6 | sehr stark |
| 10,65 - 10,8 | schwach |
| 21,4 - 21,8 | schwach |
| 21,65 - 22,0 | schwach |
| 22,2 - 22,6 | schwach |
| 23,6 - 23,7 | schwach |
| 27,1 - 27,3 | schwach |
| 28,7 - 29,1 | schwach |
| 30,0 - 30,5 | schwach |
| 32,7 - 32,9 | schwach |

**Beispiele**

1. In 220 g eines Aluminiumhydroxidgels mit 2,3 Masse % $Al_2O_3$ werden unter Rühren 8,2 g Polyphosphorsäure der mittleren Kettenlänge 8 gegeben. Diese Reaktionsmischung wird in einen Autoklaven überführt und 20 Stunden bei 130°C unter autogenem Druck hydrothermal umgesetzt. Nach dem Abkühlen des Au-

3

toklaven wird das Produkt filtriert, gewaschen und bei 50°C getrocknet. Der Filterkuchen besteht zu ca. 50 % aus dem gewünschten Molekularsiebprodukt mit zumindest den zu den in Tabelle 1 aufgelisteten Röntgenreflexen gehörenden Netzebenenabständen.

2. In 220 g eines Aluminiumhydroxidgels mit 2,3 Masse % $Al_2O_3$ werden unter Rühren 8,2 g Polyphosphorsäure der mittleren Kettenlänge 8 gegeben. In diese Reaktionsmischung werden 4,2 g einer kristallisationsfördernden Substanz mit zumindest den zu den in Tabelle 1 aufgelisteten Röntgenreflexen gehörenden Netzebenenabständen gegeben und homogenisiert und 44 Stunden bei 130°C unter autogenem Druck hydrothermal umgesetzt. Nach dem Abkühlen des Autoklaven wird das Produkt filtriert, gewaschen und bei 50°C getrocknet. Der Filterkuchen besteht zu ca. 90 % aus dem gewünschten Molsiebprodukt mit zumindest den zu den in Tabelle 1 aufgelistetene Röntgenreflexen gehörenden Netzebenenabständen.

3. In 100 g eines Aluminiumhydroxidgels mit 2,3 Masse % $Al_2O_3$ werden unter Rühren 4,1 g Polyphosphorsäure der mittleren Kettenlänge 8 gegeben. Das erhaltene Gel wird mit 107 g Wasser verdünnt und homogenisiert. In diese Reaktionsmischung werden 0,34 g einer kristallisationsfördernden Substanz mit zumindest den zu den in Tabelle 1 aufgelisteten Röntgenreflexen gehörenden Netzebenenabständen gegeben und homogenisiert und 44 Stunden bei 130°C unter autogenem Druck hydrothermal umgesetzt. Der Filterkuchen besteht zu ca. 90 % aus dem gewünschten Molsiebprodukt mit zumindest den zu den in Tabelle 1 aufgelisteten Röntgenreflexen gehörenden Netzebenenabständen.

4. In 220 g eines Aluminiumhydroxidgels mit 2,3 Masse % $Al_2O_3$ werden unter Rühren 8,2 g Polyphosphorsäure der mittleren Kettenlänge 8 gegeben. Diese Reaktionsmischung wird 72 Stunden bei 90°C gerührt. Dieses gealterte, aber noch röntgenamorphe Keimgel wird zu einer zweiten Reaktionsmischung bestehend aus 2200 g eines Aluminiumhydroxidgels mit 2,3 Masse % $Al_2O_3$ und 82 g Polyphosphorsäure der mittleren Kettenlänge 8 gegeben und homogenisiert und 44 Stunden bei 130°C unter autogenem Druck hydrothermal umsetzt. Der Filterkuchen besteht zu ca. 80 % aus dem gewünschten Molsiebprodukt mit zumindest den zu den in Tabelle 1 aufgelisteten Röntgenreflexen gehörenden Netzebenenabständen.

5. Unter intensiver Rührung werden 65 g Wasser, 13,6 g Pseudo-Böhmit (25 Masse-% $H_2O$) und 17 gr Polyphosphorsäure der mittleren Kettenlänge 8 homogenisiert. Zu dieser Suspension werden ebenfalls unter Rühren 5 g Kieselsol (30 Gew.-% $SiO_2$) gegeben. Diese Reaktionsmischung wird in einen Autoklaven überführt und 20 Stunden bei 130°C unter autogenem Druck hydrothermal umgesetzt. Nach dem Abkühlen des Autoklaven wird das Produkt filtriert, gewaschen und bei 50°C getrocknet. Der Filterkuchen besteht zu ca. 50 % aus dem gewünschten Silicoalumophosphat mit zumindest den in Tabelle 1 aufgelisteten Röntgenreflexen gehörenden Netzebenenabständen.

6. In 220 g eines Aluminiumhydroxidgels mit 2,3 Masse % $Al_2O_3$ werden unter Rohren 4,1 g Poylphosphorsäure der mitteleren Kettenlänge 8 und 5,36 g $GeCl_3$ gegeben. Diese Reaktionsmischung wird 72 h bei 90°C gerührt und anschließend 44 h bei 130°C unter autogenem Druck hydrothermal getrockner. Der Filterkuchen besteht zu ca. 50 % aus dem gewünschten Germanosilicoalumophosphat mit zumindest den zu den in Tabelle 1 aufgelisteten Röntgenreflexen gehörenden Netzebenenabständen.

## Patentansprüche

1. Verfahren zur Herstellung eines kristallinen Alumophosphat-Molekularsiebes mit mikroporöser Hohlraumstruktur, dessen Poreneingangsöffnungen größer oder gleich 0,8 nm sind, das mindestens aus $AlO_2^-$- und $PO_2^+$-Tetraeder-Bausteinen besteht und das aus einem gelartigen Reaktionsgemisch, bestehend aus einer Aluminiumverbindung, einer Phosphorverbindung, Wasser und gegebenenfalls Kristallisationskeimen durch Kristallisation hergestellt ist, gekennzeichnet dadurch, daß eine -P-O-P-Baugruppen enthaltende Phosphorverbindung zur Herstellung des gelartigen Reaktionsgemisches verwendet wird und das fertige Gemisch hydrothermal 2 - 150 Stunden bei Temperaturen von 95°C - 300°C behandelt wird.

2. Verfahren nach Anspruch 1, gekennzeichnet dadurch, daß in dem gelartigen Reaktionsgemisch zusätzlich eine oder mehrere Verbindungen eines oder mehrerer Elemente der 4. Hauptgruppe des PSE enthalten ist.

3. Verfahren nach einem der vorgehenden Ansprüche, gekennzeichnet dadurch, daß das zusätzliche Element der 4. Hauptgruppe des PSE in dem gelartigen Reaktionsgemisch Silizium ist.

4. Verfahren nach einem der vorgehenden Ansprüche, gekennzeichnet dadurch, daß als Aluminiumverbindung Aluminium-Hydroxid-Gel, Pseudo-Böhmit, Böhmit, Hydrargillit, Gibbsite oder Aluminiumisopropoxid verwendet wird.

5. Verfahren nach einem der vorgehenden Ansprüche, gekennzeichnet dadurch, daß als Siliziumverbindung Kieselsol (20 - 40 Gew. % $SiO_2$), Kieselgel, pyrogene amorphe Kieselsäure oder Tetraethoxysilan verwendet wird.

6. Verfahren nach einem der vorgehenden Ansprüche, gekennzeichnet dadurch, daß als -P-O-P-Baugruppen enthaltende Phosphorverbindungen Pyrophosphorsäure und/oder kettenförmige bzw. zyklische Polyphosphorsäuren mit einer Kettenlänge $\geqq$ 3, bzw. deren Salze, verwendet werden.

7. Verfahren nach einem der vorgehenden Ansprüche, gekennzeichnet dadurch, daß das molare $SiO_2/Al_2O_3$-Verhältnis im Reaktionsgemisch 0 - 5, vorzugsweise 0 - 3 beträgt.

8. Verfahren nach einem der vorgehenden Ansprüche, gekennzeichnet dadurch, daß das molare $P_2O_5/Al_2O_3$-Verhältnis im Reaktionsgemisch 0,5 - 2,6, vorzugsweise 1 - 1,5 beträgt.

9. Verfahren nach einem der vorgehenden Ansprüche, gekennzeichnet dadurch, daß das molare $H_2O/Al_2O_3$-Verhältnis im Reaktionsgemisch 30 - 500, vorzugsweise 40 - 150 beträgt.

10. Verfahren nach einem der vorhergehenden Ansprüche, gekennzeichnet dadurch, daß teilkristalline oder kristalline Kristallisationshilfsstoffe zum Reaktionsgemisch zugesetzt werden, die zumindest Netzebenenabständen aufweisen, die zu folgenden $2\theta$-Röntgenreflexen (Cu-k$\alpha$-Strahlung) mit zugleich angegebener Intensität gehören :

| $2\theta$ Röntgenreflexe (Cu-k$\alpha$-Strahlung) | Intensität |
|---|---|
| 6,2 – 5,6 | sehr stark |
| 10,65 – 10,8 | schwach |
| 21,4 – 21,8 | schwach |
| 21,65 – 22,0 | schwach |
| 22,2 – 22,6 | schwach |
| 23,6 – 23,7 | schwach |
| 27,1 – 27,3 | schwach |
| 28,7 – 29,1 | schwach |
| 30,0 – 30,5 | schwach |
| 32,7 – 32,9 | schwach |

11. Verfahren nach einem der vorgehenden Ansprüche, gekennzeichnet dadurch, daß man dem Reaktionsansatz ein gealtertes, aber noch röntgenamorphes Keimbildungsgel mit einem $P_2O_5/Al_2O_3$-Verhältnis von 0,5 - 2,6, vorzugsweise 1 - 1,5 zusetzt.

12. Verfahren nach einem der vorhergehenden Ansprüche, gekennzeichnet dadurch, daß das hergestellte Molekularsieb zumindest die Netzebenenabständen aufweist, die zu folgenden $2\theta$ Röntgenreflexen (Cu-k$\alpha$-Strahlung) mit zugleich angegebener Intensität gehören :

| 2θ Röntgenreflexe (Cu–kα–Strahlung) | Intensität |
|---|---|
| 6,2 – 5,6 | sehr stark |
| 10,65 – 10,8 | schwach |
| 21,4 – 21,8 | schwach |
| 21,65 – 22,0 | schwach |
| 22,2 – 22,6 | schwach |
| 23,6 – 23,7 | schwach |
| 27,1 – 27,3 | schwach |
| 28,7 – 29,1 | schwach |
| 30,0 – 30,5 | schwach |
| 32,7 – 32,9 | schwach |

13. Verwendung des nach einem der vorgehenden Ansprüche hergestellten Molekularsiebes in Trennverfahren und/oder katalytischen Reaktionen.

## Claims

1. Process for the preparation of a crystalline aluminophosphate molecular sieve with microporous void structure, the pore entrance apertures of which are greater than or equal to 0.8 nm, which is composed at least of $AlO_2^-$- and $PO_2^+$ tetrahedra building blocks and which is prepared by crystallisation from a gel-like reaction mixture comprising an aluminium compound, a phosphorus compound, water and optionally crystallisation nuclei, characterised in that a phosphorus compound containing -P-O-P- building units is used to prepare the gel-like reaction mixture, and the finished mixture is treated hydrothermally for 2 - 150 hours at temperatures of 95 °C - 300 °C.

2. Process according to claim 1, characterised in that one or more compounds of one or more elements of the 4th main group of the periodic system of elements is additionally contained in the gel-like reaction mixture.

3. Process according to one of the preceding claims, characterised in that the additional element of the 4th main group of the periodic system of elements in the gel-like reaction mixture is silicon.

4. Process according to one of the preceding claims, characterised in that the aluminium compound used is aluminium hydroxide gel, pseudo-boehmite, boehmite, hydrargillite, gibbsite or aluminium isopropoxide.

5. Process according to one of the preceding claims, characterised in that the silicon compound used is silica sol (20 - 40 % by wt. of $SiO_2$), silica gel, pyrogenic amorphous silica or tetraethoxysilane.

6. Process according to one of the preceding claims, characterised in that the -P-O-P-building units-containing phosphorus compounds used are pyrophosphoric acid and/or chain or cyclic polyphosphoric acids with a chain length $\geq$ 3, or salts thereof.

7. Process according to one of the preceding claims, characterised in that the molar $SiO_2/Al_2O_3$ ratio in the reaction mixture is 0 - 5, preferably 0 - 3.

8. Process according to one of the preceding claims, characterised in that the molar $P_2O_5/Al_2O_3$ ratio in the reaction mixture is 0.5 - 2.6, preferably 1 - 1.5.

9. Process according to one of the preceding claims, characterised in that the molar $H_2O/Al_2O_3$ ratio in the

reaction mixture is 30 - 500, preferably 40 - 150.

10. Process according to one of the preceding claims, characterised in that partially crystalline or crystalline crystallisation auxiliaries are added to the reaction mixture which have at least interplanar spacings that belong to the following $2\theta$-X-ray reflections (Cu-k$\alpha$-radiation) with the intensity given at the same time:

| $2\theta$ X-ray reflections (Cu-k$\alpha$- radiation) | Intensity |
|---|---|
| 6.2 − 5.6 | very strong |
| 10.65 − 10.8 | weak |
| 21.4 − 21.8 | weak |
| 21.65 − 22.0 | weak |
| 22.2 − 22.6 | weak |
| 23.6 − 23.7 | weak |
| 27.1 − 27.3 | weak |
| 28.7 − 29.1 | weak |
| 30.0 − 30.5 | weak |
| 32.7 − 32.9 | weak |

11. Process according to one of the preceding claims, characterised in that an aged but still radiopaque nucleating gel with a $P_2O_5/Al_2O_3$ ratio of 0.5 - 2.6, preferably 1 - 1.5 is added to the reaction batch.

12. Process according to one of the preceding claims, characterised in that the prepared molecular sieve has at least the interplanar spacings that belong to the following $2\theta$ X-ray reflections (Cu-k$\alpha$ radiation), with the intensity given at the same time:

| $2\theta$ X-ray reflections (Cu-k$\alpha$- radiation) | Intensity |
|---|---|
| 6.2 − 5.6 | very strong |
| 10.65 − 10.8 | weak |
| 21.4 − 21.8 | weak |
| 21.65 − 22.0 | weak |
| 22.2 − 22.6 | weak |
| 23.6 − 23.7 | weak |
| 27.1 − 27.3 | weak |
| 28.7 − 29.1 | weak |
| 30.0 − 30.5 | weak |
| 32.7 − 32.9 | weak |

13. Use of the molecular sieve prepared according to one of the preceding claims in separation processes and/or catalytic reactions.

**Revendications**

1. Procédé pour préparer un tamis moléculaire aluminophosphate cristallin à grands pores à structure lacunaire microporeuse, dont les orifices de pores sont supérieurs ou égaux à 0,8 nm, qui est constitué au moins des éléments constitutifs tétraèdres $AlO_2^-$ et $PO_2^+$ et que l'on prépare par cristallisation à partir d'un mélange réactionnel gélifié constitué d'un composé d'aluminium, d'un composé de phosphore, d'eau et le cas échéant de germes de cristallisation, caractérisé en ce qu'on utilise un composé du phosphore contenant des éléments constitutifs -P-O-P- pour préparer le mélange réactionnel gélifié et on traite hydrothermalement le mélange obtenu 2 à 150 heures à des températures de 95°C à 300°C.

2. Procédé selon la revendication 1, caractérisé en ce que dans le mélange réactionnel gélifié se trouve en plus un ou plusieurs composés d'un ou plusieurs éléments du quatrième groupe principal du tableau périodique des éléments.

3. Procédé selon l'une des revendications précédentes caractérisé en ce que l'élément supplémentaire du 4ème groupe principal du tableau périodique des éléments dans le mélange réactionnel gélifié est le silicium.

4. Procédé selon l'une des revendications précédentes, caractérisé en ce qu'on utilise comme composé d'aluminium un gel hydroxyde d'aluminium, de la pseudo-bohmite, de la böhmite, de l'hydrargillite, de la gibbsite ou de l'isopropoxyde d'aluminium.

5. Procédé selon l'une des revendications précédentes caractérisé en ce qu'on utilise comme composé de silicium du sol de silice (20 - 40 % en poids de $SiO_2$), du gel de silice, de la silice amorphe pyrogénée ou du tétraéthoxysilane.

6. Procédé selon l'une des revendications précédentes, caractérisé en ce qu'on utilise comme composé du phosphore contenant des groupes constitutifs -P-O-P- de l'acide pyrophosphorique et/ou des acides polyphosphoriques en chaîne ou cyclique avec une longueur de chaîne $\geqq$ 3 ou leurs sels.

7. Procédé selon l'une des revendications précédentes caractérisé en ce que la proportion molaire $SiO_2/Al_2O_3$ dans le mélange réactionnel est 0 - 5, de préférence 0 - 3.

8. Procédé selon l'une des revendications précédentes caractérisé en ce que la proportion molaire $P_2O_5/Al_2O_3$ dans le mélange réactionnel est 0,5 - 2,6, de préférence 1 - 1,5.

9. Procédé selon l'une des revendications précédentes caractérisé en ce que la proportion molaire $H_2O/Al_2O_3$ dans le mélange réactionnel est 30 - 500, de préférence 40 - 150.

10. Procédé selon l'une des revendications précédentes caractérisé en ce qu'on ajoute au milieu réactionnel des substances additionnelles de cristallisation cristallines ou partiellement cristallines qui présentent au moins les paramètres de réseau qui correspondent aux diffractions de rayons X $2\theta$ suivants (rayonnement Cu-k$\alpha$) avec l'intensité correspondante :

```
Difraction rayons X
(rayonnement Cu-kx)              Intensité
   6,2  -   5,6                  très forte
  10,65 -  10,8                  faible
  21,4  -  21,8                  faible
  21,65 -  22,0                  faible
  22,2  -  22,6                  faible
  23,6  -  23,7                  faible
  27,1  -  27,3                  faible
  28,7  -  29,1                  faible
  30,0  -  30,5                  faible
  32,7  -  32,9                  faible
```

11. Procédé selon l'une des revendications précédentes caractérisé en ce qu'on ajoute au milieu réactionnel un gel de formation de gel vieilli mais encore amorphe aux rayons X avec une proportion $P_2O_5/Al_2O_3$ de 0,5 - 2,6, de préférence 1 - 1,5.

12. Procédé selon l'une des revendications précédentes caractérisé en ce que le tamis moléculaire préparé présente au moins les paramètres de réseau qui correspondent aux angles de diffraction 2 e de rayons X (rayonnement Cu-kα) avec l'intensité correspondante.

```
Diffraction rayons X
(rayonnement Cu-kx)             Intensité
   6,2  -   5,6                  très forte
  10,65 -  10,8                  faible
  21,4  -  21,8                  faible
  21,65 -  22,0                  faible
  22,2 -  22,6                   faible
  23,6 -  23,7                   faible
  27,1 -  27,3                   faible
  28,7 -  29,1                   faible
  30,0 -  30,5                   faible
  32,7 -  32,9                   faible
```

13. Utilisation du tamis moléculaire préparé selon l'une des revendications précédentes dans un procédé de fractionnement et/ou dans des réactions catalysées.